# EUROPÄISCHE PATENTSCHRIFT

(11) **EP 2 875 951 B1**
(45) Veröffentlichungstag und Bekanntmachung des Hinweises auf die Patenterteilung: **31.05.2023**
(21) Anmeldenummer: 14189859.3
(22) Anmeldetag: 22.10.2014
(51) Int. Cl.: B41F 33/00, B41F 33/02, G08C 17/02

(54) **Wallscreen-Anzeigeeinrichtung mit Touchbedienung**
Wallscreen display with touch control
Écran Wallscreen à commande tactile

(30) Priorität: 20.11.2013 DE 102013019425
(43) Veröffentlichungstag der Anmeldung: 27.05.2015
(73) Patentinhaber: Heidelberger Druckmaschinen AG, 69115 Heidelberg (DE)
(72) Erfinder: König, Edelbert, 76709 Kronau (DE); Hauck, Dieter, 69412 Eberbach (DE)

(56) Entgegenhaltungen:
- EP-A1- 2 055 483
- EP-A1- 2 648 096
- DE-A1-102007 058 708
- DE-A1-102009 018 477
- DE-A1-102012 005 975

## Beschreibung

Die vorliegende Erfindung betrifft eine Vorrichtung zur Bedienung von Druckmaschinen und Farbmessgeräten, welche eine Anzeigeeinrichtung aufweisen.

Eine derartige Vorrichtung ist z. B. aus der Offenlegungsschrift DE 10 2007 058 708 A1 bekannt, welche ein Bedienkonzept für Druckmaschinen offenbart, welche wenigstens einen Rechner aufweisen, eine Bedieneinrichtung, eine Eingabeeinrichtung und eine Ausgabevorrichtung. Der Rechner der Maschine verarbeitet dabei wenigstens zwei Signale aus der Gruppe von akustischen, haptischen oder optischen Informationen. Dies bedeutet, dass der Drucker wenigstens zwei Möglichkeiten hat, Informationen zurückgemeldet zu bekommen. Ebenso kann der Drucker Bedienkommandos nicht nur über eine Tastatur eingeben, sondern z. B. per Sprache auch über ein Mikrofon. Weiterhin ist es möglich, mittels einer Kamera Gesten des Bedienpersonals zu erkennen und so z. B. Bewegungen der Hände des Bedienpersonals aufzuzeichnen und in entsprechende Bedienbefehle zur Steuerung der Druckmaschine umzusetzen.

Aus der Patentanmeldung EP 2 055 483 A1 geht eine am Steuerstand fest installierte Anzeigevorrichtung für Bedruckstoffe verarbeitende Maschinen hervor, welche über einen Touchscreen verfügen. Auf diese Art und Weise kann der Bediener der Bedruckstoffe verarbeitenden Maschine Veränderungen an den Einstellungen der Maschine durch bloßes Berühren entsprechender Orte auf der Anzeigeeinrichtung vornehmen. Dabei ist weiterhin vorgesehen, dass die Anzeigevorrichtung einen großen Bildschirm zur Darstellung eines Druckbildes oder Bedruckstoffs wenigstens in Originalgröße aufweist. In dem Fall, dass ein großer Bildschirm verwendet wird, dient dieser lediglich der Anzeige eines Bedruckstoffs in Originalgröße und wird mit einem kleiner zweiten Bildschirm in Form eines Touchscreens kombiniert, der ebenfalls am Maschinensteuerstand fest installiert ist, um so über den Touchscreen leichter Bedienbefehle entgegennehmen zu können. Die Anzeigevorrichtung ist so eingerichtet, dass der Drucker die Bedienbefehle, welcher er über den Touchscreen eingibt, sowohl auf dem Touchscreen als auch auf dem großen Bildschirm angezeigt bekommt. Dies geschieht dadurch, dass sowohl auf dem großen Bildschirm als auch auf dem Touchscreen der Bedruckstoff oder das Druckbild in einer Überlagerung mit entsprechenden Komponenten der Maschine angezeigt wird.

Die Offenlegungsschrift DE 10 2009 018 477 A1 betrifft eine videoüberwachte Druckmaschine, welche ebenfalls über einen Touchscreen und einen Großbildschirm verfügt, wobei beide an den Steuerungsrechner der Druckmaschine angeschlossen sind. Sowohl auf dem Touchscreen als auch auf dem großen Bildschirm können grafische Benutzeroberflächen angezeigt werden, mit denen die Druckmaschine bedient werden kann. Auf dem Touchscreen können außerdem Bedienbefehle eingegeben werden, um Einstellungen der Druckmaschine zu verändern und die Wiedergabe von Videobildern, welche mittels einer Kamera in der Druckmaschine aufgenommen werden, zu steuern.

Aus der europäischen Patentanmeldung EP 2 648 096 A1 geht ein Verfahren und ein System zur Steuerung einer Anzeigeeinrichtung hervor, wobei die Anordnung von Symbolen auf einem ersten großen Bildschirm mittels eines kleinen zweiten Bildschirms geschieht. Dieser kleine zweite Bildschirm kann als Touchscreen ausgeführt sein und über Gestensteuerung verfügen. Bei dem kleinen Touchscreen handelt es sich z. B. um ein Smartphone oder ein Tablet. Bei dem großen Bildschirm handelt es sich bevorzugt um ein Fernsehgerät. Der Benutzer kann nun mittels des Touchscreens auf dem kleinen Bildschirm Bediensymbole umordnen und somit die Benutzeroberfläche verändern. Wenn die Veränderung abgeschlossen ist, kann er diese Veränderungen drahtlos an das Fernsehgerät übertragen und so bewirken, dass die dortige grafische Benutzeroberfläche an die Änderungen des kleinen Bildschirms angepasst wird. Auf diese Art und Weise kann der Benutzer bequem über den kleinen Bildschirm die Bedienoberfläche des größeren Bildschirms verändern, ohne diese berühren zu müssen.

Die Offenlegungsschrift DE 10 2012 005 975 A1 betrifft eine Vorrichtung zum Bedienen einer mit einem Handhabungsgerät ausgestatteten Maschine, insbesondere einer Spritzgießmaschine. Dazu verfügt die Maschine über ein an der Maschine befestigtes stationäres Bediengerät und ein zweites mobiles Bediengerät. Beide Bediengeräte sind vorzugsweise als Touchscreen ausgeführt. Das mobile Bediengerät weist jedoch eine Bildschirmfläche auf, welche nur ungefähr halb so groß ist wie die Bildschirmfläche des stationären Bediengeräts. Auf diese Art und Weise kann das mobile Bediengerät kleiner ausgestaltet werden und somit leichter transportiert werden. Um dennoch die Bildschirmoberfläche des stationären Bediengeräts auf dem kleineren Bediengerät darstellen zu können, wird die Bildschirmseite des stationären Bildschirms in mehrere Teile unterteilt, wobei auf der Bildschirmfläche des kleineren mobilen Bediengeräts jeweils immer nur Teile der Bildschirmoberfläche des großen stationären Bediengeräts angezeigt werden. So kann die Bildschirmfläche des großen Bediengeräts in einen oberen und unteren Teil eingeteilt werden, wobei auf dem mobilen Bildschirmgerät jeweils immer nur der obere oder der untere Teil angezeigt wird. Dabei können alle Elemente der Darstellung des stationären Bediengeräts identisch übernommen werden, es können aber auch geringfügige Anpassungen vorgenommen werden. Dadurch kann trotz der unterschiedlichen Bildschirmgröße die gesamte Bedien- und Anzeigephilosophie auf beiden Bediengeräten die gleiche sein.

Es ist Aufgabe der vorliegenden Erfindung, eine weitere Vorrichtung zur Bedienung von Druckmaschinen und Farbmessgeräten zu schaffen, welche eine Anzeigeeinrichtung aufweisen.

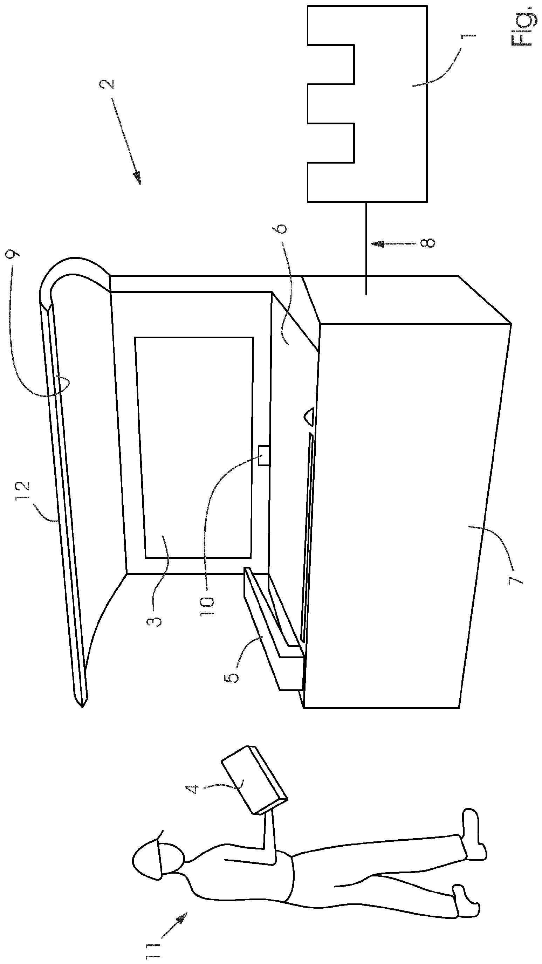

Diese Aufgabe wird erfindungsgemäß durch Patentanspruch 1 gelöst. Vorteilhafte Ausgestaltungen der Erfindung sind den Unteransprüchen, der Beschreibung und der Zeichnung zu entnehmen. Die vorliegende Erfindung zeichnet sich dadurch aus, dass eine mobile Bedieneinrichtung mit Touchscreen zur Bedienung der Funktionen der Druckmaschine oder des Farbmessgeräts und zur Beeinflussung der Anzeigedarstellung auf der Anzeigeeinrichtung vorgesehen ist und dass zwischen der mobilen Bedieneinrichtung und der Anzeigeeinrichtung eine drahtlose Kommunikationsverbindung besteht. Bei dieser erfindungsgemäßen Bedieneinrichtung gibt es neben der Anzeigeeinrichtung zur Darstellung des Zustands der Druckmaschine oder des Farbmessgeräts sowie der Anzeige von Betriebsdaten eine mobile Bedieneinrichtung mit Touchscreen, mit der die Anzeigeeinrichtung und die Druckmaschine oder das Farbmessgerät gesteuert werden können. Der Touchscreen weist ebenfalls einen Bildschirm auf, über den Teile oder gesamte Bilder, welche auf der Anzeigeeinrichtung dargestellt werden, auch auf dem Touchscreen dargestellt werden können. Die mobile Bedieneinrichtung mit dem Touchscreen und die Anzeigeeinrichtung sind dabei über eine drahtlose Kommunikationsverbindung miteinander verbunden. Weiterhin kann die Anzeigeeinrichtung und/oder die mobile Bedieneinrichtung mit Touchscreen einen Rechner aufweisen. Erfindungsgemäß sind sie mit einem Rechner verbunden.

Die erfindungsgemäße Vorrichtung dient der Bedienung von Druckmaschinen, welche als Anzeigeeinrichtung einen sogenannten Wallscreen aufweisen. Als Wallscreen werden große Bildschirme am Steuerpult der Druckmaschine bezeichnet, welche üblicherweise mindestens eine Diagonale von 132,08 cm (52 Zoll) aufweisen, so dass auch große Bedruckstoffe in einer Formatklasse 100 cm x 70 cm in Originalgröße auf dem Wallscreen dargestellt werden können. Da der Wallscreen sich meist im hinteren Bereich des Steuerpults befindet und an der Rückwand des Pults angebracht ist, müssen entsprechende Bedienelemente zusätzlich zum Wallscreen vorgesehen sein, da ansonsten der Drucker bei der Bedienung der Druckmaschine keine Eingabemöglichkeit hat. Diese Aufgabe nimmt erfindungsgemäß die mobile Bedieneinrichtung mit Touchscreen wahr, welche sozusagen als verlängerter Arm des Druckers dient und zusätzliche Zeigeinstrumente wie Computermaus oder Stift überflüssig macht. Auf diese Art und Weise ist eine einfache und intuitive Bedienung der Druckmaschine mittels der Anzeigeeinrichtung und der mobilen Bedieneinrichtung mit Touchscreen möglich, da die Bildschirminhalte von Anzeigeeinrichtung und mobiler Bedieneinrichtung mit Touchscreen über die drahtlose Kommunikationsverbindung und einen Rechner immer aufeinander abgestimmt sind. Der Drucker sieht somit auf dem Touchscreen der mobilen Bedieneinrichtung zumindest ausschnittsweise genau denselben Bildinhalt wie auf der Anzeigeeinrichtung, so dass der Drucker auch die Anzeigedarstellung auf der Anzeigeeinrichtung durch Eingaben auf dem Touchscreen intuitiv beeinflussen kann. Gemäß der Erfindung ist vorgesehen, dass auf der mobilen Bedieneinrichtung und der Anzeigeeinrichtung die gleichen Bildschirminhalte angezeigt werden und dass mittels des Touchscreens der mobilen Bedieneinrichtung die Bildschirminhalte auf der mobilen Bedieneinrichtung und der Anzeigeeinrichtung parallel verändert werden. Auf diese Art und Weise können die Inhalte auf der Anzeigeeinrichtung direkt mit dem Touchscreen der mobilen Bedieneinrichtung in Einklang gebracht und damit direkt bedienbar gemacht werden. Eine indirekte Bedienung über eine Maus oder ein Touchpad ohne Bildschirmanzeige ist nicht notwendig. Weiterhin können somit die Anzeigeeinrichtung als auch der Touchscreen der mobilen Bedieneinrichtung über die gleiche Bedienphilosophie angesteuert werden, d. h. der Drucker kann auf dem Touchscreen genau denselben Bildschirminhalt sehen wie auf der Anzeigeeinrichtung, was die Bedienung erheblich erleichtert. Weiterhin erleichtert dies die Programmierung der Steuerung der Druckmaschine deutlich, da keine unterschiedlichen Bedienkonzepte zu implementieren und zu pflegen sind, vielmehr ist das Bedienkonzept auf der Anzeigeeinrichtung und auf dem Touchscreen der mobilen Bedieneinrichtung identisch, lediglich die Eingaben durch den Bediener erfolgen ausschließlich auf dem Touchscreen und nicht auf der Anzeigeeinrichtung, da diese über keine Touchscreenfunktion verfügen muss.

Erfindungsgemäß ist vorgesehen, dass die mobile Bedieneinrichtung und die Anzeigeeinrichtung über die drahtlose Kommunikationsverbindung miteinander verbunden sind. In diesem Fall ist es möglich, dass der Drucker die mobile Bedieneinrichtung mit dem Touchscreen an einem beliebigen Ort in der Druckerei einsetzen kann und insbesondere auch aus der Ferne Eingaben mit Blick auf die Anzeigeeinrichtung vornehmen kann. Dabei ist vorgesehen, dass die Bedieneinrichtung ein mobiles Bediengerät wie ein Smartphone oder ein Tablet-Computer ist. Ebenfalls ist es in einer weiteren Ausgestaltung möglich, dass die mobile Bedieneinrichtung oder Anzeigeeinrichtung ein Armbanddisplay wie. z.B. eine Armbanduhr mit Display, auch oft Smartwatch genannt, ist. Es wird als mobile Bedieneinrichtung mit Touchscreen keine spezielle Hardware benötigt, sondern es kann prinzipiell jeder beliebige Tablet-Computer oder jedes beliebige Smartphone mit einem gängigen Betriebssystem wie Android oder Apple IOS durch Aufspielen der entsprechenden Bedienoberfläche zur Steuerung von Druckmaschinen genutzt werden. Die drahtlose Kommunikation erfolgt dann über den in das Smartphone oder den Tablet-Computer integrierten Datenfunk z. B. per WLAN oder Bluetooth.

Erfindungsgemäß ist außerdem vorgesehen, dass der Steuerstand die über einen Rechner verfügt und dass in dem Rechner eine Touchscreenoberfläche zur Bedienung der Druckmaschine oder des Farbmessgeräts abgespeichert ist oder generiert wird und über die drahtlose Kommunikationsverbindung auf die mobile Bedieneinrichtung übertragen wird. In diesem Fall wird zunächst das Smartphone oder der Tablet-Computer per Datenfunk wie WLAN oder Bluetooth oder auch UMTS mit der ebenfalls mit einer Netzwerkverbindung ausgerüsteten Maschinensteuerung der Druckmaschine oder des Farbmessgeräts gekoppelt.

Nachdem die Verbindung hergestellt und autorisiert wurde, wird dann die Software zur Bedienung der Touchscreenoberfläche in Abhängigkeit des jeweiligen Betriebssystems des Smartphones oder des Tablet-Computers auf diese versendet und installiert. Auf diese Art und Weise können Smartphone oder Tablet-Computer schnell und problemlos an die Steuerung der Druckmaschine oder des Farbmessgeräts angekoppelt und in Betrieb genommen werden.

Es ist auch möglich, die Bedienung über einen Browser des mobilen Bediengeräts zu ermöglichen. In diesem Fall werden die Bildschirminhalte zur Steuerung der Maschine für das mobile Bediengerät im Rechner der Maschinensteuerung generiert und bei Bedarf auf das mobile Bediengerät versendet. Die Installation einer Software auf dem mobilen Bediengerät ist dann nicht notwendig.

In einer besonders vorteilhaften Ausgestaltung der Erfindung ist vorgesehen, dass der Bildschirminhalt der Anzeigeeinrichtung auf der mobilen Bedieneinrichtung verkleinert oder in Ausschnitten dargestellt wird. Da der Bildschirm des Touchscreens der mobilen Bedieneinrichtung meist ein deutlich kleineres Format mit einer maximalen Größe von 25,40 cm (10 Zoll) im Vergleich zum Großformat der Anzeigeeinrichtung mit 132,08 cm (52 Zoll) aufwärts aufweist, ist es von großem Vorteil, wenn der Bildschirminhalt der Anzeigeeinrichtung zunächst an das Format des Touchscreens der mobilen Bedieneinrichtung angepasst wird. Dazu kann der Bildschirminhalt der Anzeigeeinrichtung vergrößert und in Ausschnitten auf dem Touchscreen dargestellt werden. Selbst wenn der Touchscreen genauso hochauflösend ausgeführt ist wie die Anzeigeeinrichtung, so ist es dennoch sinnvoll, den Bildschirminhalt zu vergrößern und in Ausschnitten darzustellen, da ansonsten der Bediener mit dem Auge zu nah an den Touchscreen herangehen müsste, um den Inhalt noch zu erkennen.

Um die Vergrößerung und die Darstellung in Ausschnitten zu erleichtern, werden auf der Anzeigeeinrichtung und auf dem Touchscreen der mobilen Bedieneinrichtung prinzipiell die gleichen Bildschirmmasken angezeigt. Jedoch werden auf der Anzeigeeinrichtung aufgrund des größeren Formats mehrere Bildschirmmasken zugleich dargestellt, während auf der mobilen Bedieneinrichtung nur eine Bildschirmmaske angezeigt wird. Dies ist dadurch möglich, dass der Bildschirm der Anzeigeeinrichtung in mehrere Bereiche aufgeteilt ist, wo die Größe der Bereiche jeweils der Auflösung des Bildschirms der mobilen Bedieneinrichtung entspricht. In diesem Fall bedarf es keiner aufwendigen Rechenprozesse, um die Darstellung des Bildschirminhalts der Anzeigeeinrichtung an das Format des Touchscreens der mobilen Bedieneinrichtung anzupassen. Vielmehr genügt es, den jeweiligen Bereich des Bildschirms der Anzeigeeinrichtung auf dem Touchscreen der mobilen Bedieneinrichtung formatfüllend anzuzeigen, was zur automatischen Vergrößerung der Darstellung des benötigten Ausschnitts führt. Die Wahl des jeweils benötigten Ausschnitts kann dabei über entsprechende Wisch- oder Touchgesten erfolgen, mit denen auf dem Touchscreen zwischen den jeweiligen Bereichen auf der Anzeigeeinrichtung hin und her geschaltet werden kann. Dabei werden die Bildinhalte auf der Anzeigeeinrichtung vorzugsweise was die Größe anbetrifft in solche Bereiche aufgeteilt, dass diese Bereiche dann auf dem Touchscreen der mobilen Bedienrichtung in einer Größe erscheinen, in der sie mit dem Finger des Druckers bedienbar sind. Nach Abschluss einer Bedienung auf dem Touchscreen ist es möglich, dass die Übertragung von Bildinhalten vom Touchscreen der mobilen Bedieneinrichtung auf die Anzeigeeinrichtung ebenfalls durch eine entsprechende Touchgeste oder einfaches Wischen in Richtung der Anzeigeeinrichtung erfolgt. Je nach Einstellung ist es dabei möglich, dass der Bildschirminhalt im Austausch vorgenommen wird oder auf beiden Bildschirmen dupliziert wird.

In einer weiteren Ausgestaltung der Erfindung ist vorgesehen, dass die Bildschirminhalte auf der Anzeigeeinrichtung mehrere Touchscreen-Applikationen der mobilen Bedieneinrichtung umfassen. In diesem Fall ist der Inhalt der Anzeigeeinrichtung aus mehreren Applikationsbausteinen des Touchscreens der mobilen Bedieneinrichtung aufgebaut. Uber Touch- oder Wischgesten wird die jeweilig Touchscreen-Applikation ausgewählt und bedienbar gemacht. So ist es z. B. möglich, dass auf der mobilen Bedieneinrichtung acht Touchscreen-Applikationen vorhanden sind, wobei eine jeweils dem Format des Touchscreens der mobilen Bedieneinrichtung entspricht und auf diesem angezeigt wird.

Bei Einsatz der mobilen Bedieneinrichtung mit Touchscreen ist es außerdem möglich, diesen Touchscreen in einen sogenannten Touchpad-Modus umzuschalten, um z. B. filigrane Zeichnungen anzufertigen, mit denen z. B. bestimmte Bereiche auf dem Touchscreen der mobilen Bedieneinrichtung markiert werden können. Dies ist insbesondere hilfreich bei der Auswahl von Inspektionsflächen bei der Bildinspektion eines Druckbogens. Während der gesamte Druckbogen auf der Anzeigeeinrichtung angezeigt wird, wird auf dem Touchscreen der mobilen Bedieneinrichtung nur ein Ausschnitt angezeigt und der Druckbogen wird vergrößert dargestellt, woraufhin dann der Drucker über die Touchpad-Funktion einen entsprechenden Bereich auf dem Touchscreen auswählen kann, welchem er bestimmte Bildinspektionsaufgaben und -regeln zuweist. Dabei kann auch vorgesehen sein, dass zur besseren Bedienung statt mit dem Finger mit einem Zeichenstift auf dem Touchscreen die entsprechende Inspektionsfläche markiert wird. Dabei ist es besonders vorteilhaft, wenn der Touchscreen so ausgestaltet ist, dass er sowohl per Finger als auch per Stift bedient werden kann.

Es ist außerdem vorgesehen, dass der Bildschirminhalt auf der Anzeigeeinrichtung Bedienelemente enthält und dass auf der mobilen Bedieneinrichtung die Bedienelemente der Anzeigeeinrichtung angezeigt werden. In diesem Fall können die Bedienelemente aus allen oder einigen Bereichen oder Touchscreen-Applikationen der großen Anzeigeeinrichtung gefiltert werden und dann auf dem Touchscreen der mobilen Bedieneinrichtung in einer bestimmten Reihenfolge angezeigt werden. So ist es möglich alle Bedienelemente auf das kleine Format des Touchscreens der mobilen Bedieneinrichtung zu komprimieren.

Weiterhin kann vorgesehen sein, dass zwischen den Bereichen oder Touchscreen-Applikationen mittels Wischgesten auf der Bedieneinrichtung hin- und hergeschaltet wird. So kann der Bediener zwischen einzelnen Bereichen oder Applikationen durch Wischgesten auf dem Touchscreen nach rechts oder links bzw. oben oder unten oder auch diagonal einfach und bequem hin-und herschalten und bekommt auf dem Touchscreen genau die Applikation oder den Bereich angezeigt, den er sehen möchte.

Weiterhin ist es möglich, die Bedienung der Anzeigeeinrichtung über den Touchscreen der mobilen Bedieneinrichtung mit einer Steuerung zur Erfassung von Gesten im Raum zu kombinieren. In diesem Fall hat der Drucker die Möglichkeit, neben der Bedienung über den Touchscreen auch über reine Fingergesten im Raum, welche von entsprechenden Sensoren oder Kameras am Bedienpult erkannt werden, die Druckmaschine oder das Farbmessgerät zu steuern.

Die vorliegende Erfindung wird nachfolgend anhand einer Figur näher beschrieben und erläutert. Es zeigt:
- Figur: den Steuerstand einer Druckmaschine mit einer erfindungsgemäßen Bedienvorrichtung.

Der Steuerstand 2 der Druckmaschine 1 in der Figur verfügt über eine Rückwand, an der ein Wallscreen 3 befestigt ist. Dieser Wallscreen 3 ist aufgrund seines großen Formats mit vorzugsweisen 132,08 bis 177,80 cm (52 bis 70 Zoll) in der Lage, auch großformatige Druckbogen in realer Größe anzuzeigen. Weiterhin ist der Steuerstand 2 im oberen Bereich mit einer Bedachung 12 versehen, welche eine unterhalb des Wallscreens 3 angebrachte Bogenauflagefläche gegenüber Fremdlicht abschirmt. Die Bedachung 12 wiederum trägt eine Farbprüfleuchte 9, welche es erlaubt, auf der Bogenauflagefläche aufliegende Bedruckstoffe 6 mit Normlicht zu bestrahlen. Weiterhin ist es möglich, den Bedruckstoff 6 mit einem Farbmessgerät 5 zu erfassen. Wallscreen 3 und Farbmessgerät 5 sind dabei mit dem Steuerungsrechner 7 der Druckmaschine 1 verbunden. Der Steuerungsrechner 7 wiederum kommuniziert über eine Kommunikationsverbindung 8 mit der Steuerung der Druckmaschine 1. Weiterhin ist der Steuerungsrechner 7 mit einer Empfangs-/Sendeeinheit 10 verbunden, welche drahtlos ausgeführt ist und insbesondere über WLAN oder Bluetooth-Verbindung mit einem mobilen Touchscreen 4 kommuniziert. Dieser mobile Touchscreen 4 ist ein Smartphone oder ein Tablet-Computer, welcher über eine entsprechende Software mit Bedienoberfläche zur Steuerung der Druckmaschine 1 und des Farbmessgeräts 5 verfügt. Auf diese Art und Weise ist es möglich, dass eine Person 11 komfortabel die Druckmaschine 1 und das Farbmessgerät 5 auch dann bedienen kann, wenn sie nicht unmittelbar am Steuerstand 2 steht.

Prinzipiell können auf dem Wallscreen 3 und auf dem mobilen Touchscreen 4 dieselben Bildschirminhalte angezeigt werden. Aufgrund der deutlich geringeren Größe des mobilen Touchscreens 4, welcher meist maximal 25,40 cm (10 Zoll) aufweist, muss jedoch die Darstellung sinnvoll angepasst werden. Dazu wird insbesondere der Inhalt auf dem Wallscreen 3 entsprechend skaliert, d. h. in der Größe an das Format des mobilen Touchscreens 4 angepasst. Dies ist besonders einfach möglich, wenn der Wallscreen 3 in entsprechende Bereiche unterteilt ist, welche dem Format des mobilen Touchscreens 4 entsprechen. Dann können diese Bereiche des Wallscreens 3 entsprechend 1:1 auf dem mobilen Touchscreen 4 angezeigt werden, ohne dass der Steuerungsrechner 7 eine Formatanpassung rechnerisch vornehmen muss. Selbstverständlich ist es aber auch möglich, Bildschirminhalte des Wallscreens 3 über eine Zoomfunktion ausschnittsweise zu vergrößern, so dass diese auch auf dem mobilen Touchscreen 4 gut lesbar dargestellt werden können. Die Auswahl der jeweiligen Bereiche erfolgt dabei über Gesten auf dem Touchscreen 4, insbesondere über Wischgesten, um nahtlos und problemlos von einem Bildschirminhalt auf den nächsten eines anderen Bereiches überzuleiten. Eine Übertragung von Daten vom mobilen Touchscreen 4 auf den Wallscreen 3 und umgekehrt wird dabei über entsprechende Wischbewegungen in die jeweilige Richtung umgesetzt.

Der mobile Touchscreen 4 kann dabei so ausgestaltet sein, dass er nicht nur die Bedienoberfläche einer einzigen Druckmaschine 1 beinhaltet. Es ist auch möglich, dass mit dem mobilen Touchscreen mehrere Druckmaschinen 1 gesteuert werden, wobei über entsprechende Touch- oder Wischgesten zwischen den Bildschirmoberflächen hin und her geschaltet wird oder durch Erfassung der Richtung der Geste in Richtung des jeweiligen Wallscreens 3 der zugehörigen Druckmaschine 1 die Datenübertragung bzw. Steuerung bewerkstelligt und erkannt wird. Ebenso ist es auch möglich, dass eine Druckmaschine 1 über mehrere mobile Touchscreens 4 gesteuert wird. Weiterhin ist es auch möglich, auch den Wallscreen 3 mit einer Touch-Oberfläche auszurüsten. Diese Ausführungsform ist technisch aufwendig und teuer, da Touchscreen-Oberflächen in einem Großformat wie einem Wallscreen 3 nicht üblich sind. Wenn gewünscht, ist es jedoch technisch möglich, auch den Wallscreen 3 mit einer entsprechenden Touchscreen-Oberfläche auszurüsten, um dann der Person 11 zusätzlich eine direkte Eingabe über den Wallscreen 3 zu ermöglichen, insbesondere wenn die Person 11 direkt vor dem Steuerstand 2 steht und z. B. einen aufliegenden Bedruckstoff 6 näher betrachtet und daher ohnehin über den Bedruckstoff 6 gebeugt ist. Erfindungsgemäß ist zudem zusätzlich ein Touchscreen 4 auch fest am Steuerstand 2, insbesondere im vorderen Bereich, installiert. Aufgrund der Verwendung der gleichen Bedienoberfläche auf dem Wallscreen 3 und dem mobilen Touchscreen 4 ist eine besonders intuitive Bedienung möglich, da die Person 11 sowohl auf dem mobilen Touchscreen 4 als auch auf dem Wallscreen 3 jeweils prinzipiell denselben Bildschirminhalt sieht, der lediglich in der Größe verändert und ausschnittsweise dargestellt wird. Auf diese Art und Weise ist eine Bedienung intuitiv und sicher möglich, was den Bedienkomfort für Druckmaschinen und Farbmessgeräte deutlich erhöht. Weiterhin ist es auch möglich, zwischen Applikationen zu unterscheiden, welche ausschließlich der Darstellung dienen und Applikationen, welche ausschließlich der Bedienung dienen. Dabei ist es möglich, die Applikationen zur Anzeige nur auf dem Wallscreen 3 darzustellen, da über diesen keine direkte Bedienung erforderlich sein muss, während auf dem Touchscreen 4 alle Applikationen oder zumindest die Applikationen mit Bedienelementen angezeigt werden, so dass über den mobilen Touchscreen 4 eine entsprechende Eingabe der Person 11 möglich ist. Applikationen ohne Bedienfunktion werden dann ausschließlich auf dem Wallscreen 3 angezeigt. Zwischen den Applikationen kann mit Wischgesten auf dem Touchscreen 4 bequem hin- und hergeschaltet werden.

### Bezugszeichenliste

- 1: Druckmaschine
- 2: Steuerstand
- 3: Wallscreen
- 4: Mobiler Touchscreen
- 5: Farbmessgerät
- 6: Bedruckstoff
- 7: Steuerungsrechner
- 8: Kommunikationsverbindung mit der Steuerung der Druckmaschine
- 9: Farbprüfleuchte
- 10: Empfangs-/Sendeeinheit
- 11: Person
- 12: Bedachung

## Patentansprüche

1. Vorrichtung zur Bedienung von Druckmaschinen (1) und Farbmessgeräten (5), welche eine Anzeigeeinrichtung (3) aufweisen,
wobei eine mobile Bedieneinrichtung (4) mit Touchscreen in Form eines Smartphones oder eines Tablet-Computers zur Bedienung der Funktionen einer Druckmaschine (1) oder eines Farbmessgeräts (5) und zur Beeinflussung der Anzeigedarstellung auf der Anzeigeeinrichtung (3) vorgesehen ist und wobei zwischen der mobilen Bedieneinrichtung (4) und der Anzeigeeinrichtung (3) eine drahtlose Kommunikationsverbindung (10) besteht; wobei auf mobilen Bedieneinrichtung (4) und der Anzeigeeinrichtung (3) die gleichen Bildschirminhalte angezeigt werden und wobei mittels des Touchscreens der mobilen Bedieneinrichtung (4) die Bildschirminhalte auf der mobilen Bedieneinrichtung (4) und der Anzeigeeinrichtung (3) parallel verändert werden, wobei
die Anzeigeeinrichtung (3) ein Wallscreen (3) ist, der an einem Steuerstand (2) der Druckmaschine (1) oder des Farbmessgeräts (5) angebracht ist, und der Steuerstand (2) über einen Rechner (7) verfügt, wobei in dem Rechner (7) eine Touchscreen-Oberfläche zur Bedienung der Druckmaschine (1) oder des Farbmessgeräts (5) abgespeichert ist oder generiert wird und über die drahtlose Kommunikationsverbindung (10) auf die mobile Bedieneinrichtung (4) übertragen wird und dass eine zusätzliche Bedieneinrichtung mit Touchscreen fest am Steuerstand (2) installiert ist, auf welche die Touchscreen-Oberfläche zur Bedienung der Druckmaschine (1) oder des Farbmessgeräts (5) vom Rechner (7) über eine zusätzliche Kommunikationsverbindung übertragen wird.

2. Vorrichtung nach Anspruch 1, wobei der Bildschirminhalt des Wallscreens (3) auf der mobilen Bedieneinrichtung (4) vergrößert oder in Ausschnitten dargestellt wird.

3. Vorrichtung nach einem der vorhergehenden Ansprüchen, wobei der Bildschirm des Wallscreens (3) in mehrere Bereiche aufgeteilt ist, welche jeweils der Größe oder der Auflösung des Bildschirms der mobilen Bedieneinrichtung (4) entsprechen.

4. Vorrichtung nach einem der vorhergehenden Ansprüchen, wobei die Bildschirminhalte auf dem Wallscreen (3) mehrere Touchscreen-Applikationen der mobilen Bedieneinrichtung (4) umfassen.

5. Vorrichtung nach einem der vorhergehenden Ansprüchen, wobei der Bildschirminhalt auf dem Wallscreen (3) Bedienelemente enthält und wobei auf der mobilen Bedieneinrichtung (4) die Bedienelemente des Wallscreens (3) angezeigt werden.

6. Vorrichtung nach einem der Ansprüche 3 oder 4, wobei zwischen den Bereichen oder Touchscreen-Applikationen mittels Wischgesten auf der mobilen Bedieneinrichtung (4) hin- und hergeschaltet wird.

## Claims

1. Device for operating printing machines (1) and colour measurement devices (5) which include a display device (3),
wherein a mobile operating device (4) with a touch screen in the form of a smart phone or tablet computer is provided to operate the functions of a printing machine (1) or of a colour measurement device (5) and to influence the representation on the display device (3) and wherein a wireless communication link exists between the mobile operating device and the display device,
wherein the same screen contents is shown on the operating device (4) and on the display device (3) and wherein the screen contents on the mobile operating device (4) and on the display device (3) are modified in parallel by means of the touch screen of the mobile operating device (4),
wherein the display device (3) is a wall screen fixed to a control panel (2) of the printing machine (1) or of the colour measurement device (5) and the control panel (2) has a computer (7), wherein a touch screen surface for operating the printing machine (1) or colour measurement device (5) is saved or generated on the computer (7) and transmitted to the mobile operating device (4) via the wireless communication link and wherein an additional operating device with a touch screen is installed to be stationary on the control panel (2) and wherein the touch screen surface for operating the printing machine (1) or colour measurement device (5) is transmitted to the stationary additional operating device from the computer via an additional communication link.

2. Device according to claim 1,
wherein the screen contents of the wall screen (3) is displayed on the mobile operating device (4) in an enlarged way or in sections.

3. Device according to any one of the preceding claims,
wherein the screen of the wall screen (3) is subdivided into multiple regions, each of which corresponds to the size or resolution of the screen of the mobile operating device (4).

4. Device according to any one of the preceding claims,
wherein the screen contents on the wall screen (3) comprise multiple touch screen applications of the mobile operating device (4).

5. Device according to any one of the preceding claims,
wherein the screen contents on the wall screen (3) include operating elements and wherein the operating elements of the wall screen (3) are displayed on the mobile operating device (4).

6. Device according to any one of claims 3 or 4,
wherein swiping gestures are used to switch between the regions or touch screen applications on the mobile operating device (4).

## Revendications

1. Dispositif pour la commande de machines à imprimer (1) et d'appareils de contrôle couleurs (5) qui présentent un équipement d'affichage (3), pour lequel il est prévu un équipement de commande mobile (4) avec écran tactile sous la forme d'un smartphone ou d'un ordinateur tablette pour la commande des fonctions d'une machine à imprimer (1) ou d'un appareil de contrôle couleurs (5) et pour influencer la représentation de l'affichage sur l'équipement d'affichage (3) et pour lequel une liaison de communication sans fil (10) existe entre l'équipement de commande mobile (4) et l'équipement d'affichage (3), les mêmes contenus d'écran étant affichés sur l'équipement de commande mobile (4) et sur l'équipement d'affichage (3) et les contenus d'écran étant modifiés en parallèle sur l'équipement de commande mobile (4) et sur l'équipement d'affichage (3) au moyen de l'écran tactile de l'équipement de commande mobile (4), pour lequel l'équipement d'affichage (3) est un écran mural (3) qui est monté sur un poste de commande (2) de la machine à imprimer (1) ou de l'appareil de contrôle couleurs (5), et le poste de commande (2) dispose d'un ordinateur (7), une surface d'écran tactile pour la commande de la machine à imprimer (1) ou de l'appareil de contrôle couleurs (5) étant mémorisée ou générée dans l'ordinateur (7) et transmise à l'équipement de commande mobile (4) via la liaison de communication sans fil (10), et un équipement de commande supplémentaire avec écran tactile étant installé de manière fixe sur le poste de commande (2), sur lequel la surface d'écran tactile pour la commande de la machine à imprimer (1) ou de l'appareil de contrôle couleurs (5) est transmise par l'ordinateur (7) via une liaison de communication supplémentaire.

2. Dispositif selon la revendication 1, pour lequel le contenu de l'écran mural (3) est représenté sur l'équipement de commande mobile (4) en mode agrandi ou sous forme fractionnée.

3. Dispositif selon l'une des revendications précédentes, pour lequel l'écran de l'écran mural (3) est divisé en plusieurs zones qui correspondent chacune à la taille ou à la résolution de l'écran de l'équipement de commande mobile (4).

4. Dispositif selon l'une des revendications précédentes, pour lequel les contenus d'écran sur l'écran mural (3) regroupent plusieurs applications d'écran tactile de l'équipement de commande mobile (4).

5. Dispositif selon l'une des revendications précédentes, pour lequel le contenu de l'écran sur l'écran mural (3) contient des éléments de commande et pour lequel les éléments de commande de l'écran mural (3) sont affichés sur l'équipement de commande mobile (4).

6. Dispositif selon l'une des revendications 3 ou 4, pour lequel on passe d'une zone ou d'une application d'écran tactile à une autre au moyen de gestes de balayage sur l'équipement de commande mobile (4).
